# EUROPEAN PATENT SPECIFICATION

(11) **EP 1 785 024 B1**
(45) Date of publication and mention of the grant of the patent: **22.02.2012**
(21) Application number: 06016400.1
(22) Date of filing: 07.08.2006
(51) Int. Cl.: A01C 11/02

(54) **Automatic distributor for transplanting machines**
Automatischer Verteiler für Pflanzmaschinen
Distributeur automatique pour machines de plantation

(30) Priority: 11.11.2005 IT CR20050015
(43) Date of publication of application: 16.05.2007
(73) Proprietor: Ferrari Costruzioni Meccaniche S.r.l., 46040 Guidizzolo, (MN) (IT)
(72) Inventor: Ferrari, Francesco, 46040 Guidizzolo, (MN) (IT)
(74) Representative: Marcio', Paola

(56) References cited:
- EP-A1- 0 596 841
- EP-A2- 0 660 996
- GB-A- 2 114 413
- GB-A- 2 124 171

## Description

The present invention relates to an automatic distributor for transplanting machines.

Transplanting machines, as known in the art, are used for quick transplanting of plants, vegetables, etc... grown in small cubic clods. Said plants, while they are still rooted in the clods, are transplanted one by one into a bare soil or, sometimes, a "mulched" - i.e. covered by a thin plastic film - soil.

Generally speaking, a transplanting machine is equipped with a plant feeding unit, usually in the form of a conveyor belt; shares or equivalent means to produce a furrow in the soil; possibly a device for drilling the mulching film; a distributor disposed to put the plants into the furrow. These operations are to be performed in a very quick and precise manner, without damaging the plants; in particular, it is of a great importance for taking root and growth that a plant is well positioned into the furrow.

A known type of transplanting machine (patent IT-1262662) is equipped with a "cup" distributor, wherein a certain number of cups are carried by an articulated chain, and each cup is adapted to contain a plant with the respective cubic clod.

The chain works between two gears, and the cups are connected thereto by means of a system adapted to keep them parallel to one another: in practice, each cup is connected to the chain by means of a side pin passing through a bush which is integral with one link of the chain; a slide is associated to the free end of said bush; the cups transiting around each gear are kept parallel by said slide, through suitable guides and tracking members.

The cups are distanced by a given number of chain links, which is a function of the desired planting distance.

Each cup basically consists of an upper portion, with a gap for inserting the plants, and of a lower portion formed by two lateral walls hinged on the upper portion of the cup, and connected by a spring and hinge system enabling a joint movement thereof. The walls have a lower end with a serrated blade, which facilitates the insertion of the cup directly into the soil or into the furrow produced by the share, and enables to cut the mulching film, when provided. For a more efficient operation on a mulched soil, it is known to add a further blade fixed to the upper portion of the cups and independent of the side walls.

Each cup further comprises a pair of shaped walls, more internal with respect to the side walls, that perform the function of retaining the plants. By means of a suitable mechanical engagement, said shaped walls are directly opened by the opening of the external ones, but with a small delay.

Near the soil, a cam controls the opening of the cup, the external walls produce a furrow, and the inner walls, opening with a slight delay, drop the plant into said furrow.

According to this system, which is sometimes referred to as "pelican", each cup performs both operations of producing the furrow (and possibly cutting the plastic film), and leaving the plant in the desired point.

There are, however, certain drawbacks: first, the plants are dropped from a height typically around 5 or 6 centimetres: this is a small but not insignificant drop, which may be sufficient to cause a slight tilting of the plants. Problems arising therefrom are essentially that verticality of the plants is not guaranteed and, above all, it may result in a bad adherence of the plants to the lower surface of the furrow, leaving a certain air gap, below the plant, that makes growth more difficult.

Another drawback is that the transplanting distance is determined by the distance between the cups on the conveying chain, and can therefore be modified only by removing or adding cups, which is a major intervention and requires a significant machine downtime.

Furthermore, when working on a mulched soil, the known cup distributors generally cut the film in a direction longitudinal to the furrow, with a divaricated T-shaped cut, simultaneously inserting the plant that, some times, may remain stuck to the plastic film. Because of this cutting action, the strips of the cut plastic film may knock against the plant and damage it, especially in strong wind conditions; the film strips are also an obstacle to visual inspection of the correct position in the soil and make irrigation less effective.

Another disadvantage is that the cup transplanting machines cannot reach very high operating speed, all the above drawbacks being more evident as speed increases.

Further prior art is found in EP-A-0596841 from the same applicant. It discloses a distributor provided with a pickup system for the cubic clods by means of two rotors elastically mounted on both sides of the end section of the conveyor belt, disposed to cooperate with a gripping member formed by two moving walls located on the sides of the conveyor belt and provided with a pneumatic drive.

An electronically controlled hydraulic motor provides intermittent action of the rotors, which are fitted with suitable transverse tabs to increase their grasping capacity. Substantially, the rotors have the task of grasping the clod (with corresponding plant) at the output of the conveyor belt and take it into the furrow, while the gripping member acts as a stop means for the other plants on the conveyor.

This type of distributor is faster than a cup distributor and is very precise in positioning the plants; nevertheless, it is not suitable for working on mulched plots, mainly because the plant is inserted into the furrow with an oblique trajectory relative to the soil.

EP-A-0660996 discloses an automatic distributor comprising a feeding device, means for making a furrow, a first pick-up system disposed to pick up the plants individually from the feeding device and take them to an intermediate position, a second pick-up system disposed to pick up plants and take them into the furrow. The chute and the planting claws constitute on the one hand the intermediate position and on the other hand the retaining means disposed to temporarily keep the plants in the intermediate position. Moving the planting claws effects a pick-up of the plants from the intermediate position.

The object of the invention is to overcome these and other drawbacks affecting the prior art, and in particular: to achieve a more precise positioning into the soil or furrow, avoiding any fall of the plants; to obtaining a good verticality and adherence to the soil; to adjust the transplanting distance a simple and fast manner, without mechanical intervention (dismantling and reassembling of the cups); to work also on mulched terrains, avoiding the above mentioned drawbacks due to the contact between the plant and the cutting strips of the mulching film.

The objects are achieved by an automatic distributor for transplanting machines of plants rooted in clods, as claimed in claim 1.

The feeding device consists, for example, of a conveyor belt, equipped with movable stop means for stopping the column of clods loaded on the belt, during the pickup action performed by said first pickup system. Said stop means are obtainable with a pneumatically controlled moving screen, mounted laterally on the end part of the conveyor belt.

Preferably, the first pickup system comprises a tool adapted to perform an alternate come-and-go movement between the outlet of the feeding device and said intermediate position; more preferably, the tool is moving on a trajectory that is substantially an arc according to a fulcrum point.

Another aspect of the invention provides for the second pickup system comprising a transplanting tool, with a linear movement and an almost vertical trajectory between the intermediate position and a transplanting position into the furrow; preferably the transplanting tool is guided by two parallel arms, or connecting rods, substantially defining an articulated parallelogram structure.

According to further aspects of the invention, the tools are operated by a wheel, powered by a hydraulic motor with an on-off solenoid value or similar system. More in detail, the aforementioned wheel carries an eccentric connecting rod, to operate the articulated parallelogram of the transplanting tool; the pickup tool is also suitably connected to said parallelogram to obtain a coordinated joint movement of the two tools.

In a particularly preferred embodiment, the pickup tool and the transplanting tool are provided with pincer-like grasping means, operated by pneumatic jacks, to clamp on both sides the clods of earth where the plants are rooted.

The distributor, as better explained below, is advantageously provided with sensors for coordinating the operation of the various mechanical members; preferably there is at least a sensor to monitor the clods arriving at the conveyor belt outlet, and a sensor suitable for detecting the position of the tools.

The sensor for monitoring the arrival of clods is preferably in the form of a movable abutment at the outlet of the feeding device, which can be moved by the arriving clod thereby actuating an electronic sensor.

The position of the tools is detected, for example, by a proximity sensor detecting the angle of rotation of the control wheel. The signal from said sensor can be used to operate the pneumatic actuators of the distributor, in particular of the pickup grippers mounted on the tools, and of the clods retaining system.

The retaining means of the clods in the intermediate position comprise, in a preferred embodiment, a pneumatically-operated moving abutment.

The distributor can be designed to work on a bare soil or also on a soil covered with plastic film (mulched). In this last case, it comprises a further tool for drilling the plastic film, synchronised with the above described tools for handling the plants.

In a preferred embodiment of the drilling tool, said tool is shaped substantially as a "U" facing forward in the running direction, and provided with an extracting lever to direct the plastic offcut of the film downwards and towards the running direction, on the side facing the soil, thus folding the film and opening a window, preferably a square window, without cutting strips being exposed and in contact with the plant. This operation is encouraged by a suitable conformation of the upper back of the share.

The distributor comprises electronic control means to manage the joint operation of several distributors mounted on a single machine, as will be explained below.

Another aspect of the invention is a transplanting machine provided with a plurality of above disclosed distributors. The distributors are mounted on a frame, carried on a front roller with adjustable height to determine the working depth; the whole is fixed frontally on a parallelogram with a wheeled side frame. The machine may be powered by a suitable engine, or designed for use with an agricultural tractor or another means of traction.

Preferably, the distributors are aligned in a row; each distributor has a dedicated hydraulic motor unit for driving the pickup tool and transplanting tool, whilst one further, common hydraulic motor is provided to drive the drilling tools of the plastic film. The hydraulic motors are controlled by independent on/off solenoid valves, but their operation is coordinated to maintain synchronism between the drilling of the plastic film and the handling of the plants.

More in detail, the transplanting machine comprises a signal generator for providing a signal correlated to the distance covered by the machine, e.g. a pulse generator fixed to the frontal roller or to the supporting wheels; the machine is further equipped with a decoding card and a numeric control keypad or equivalent device for setting the operating parameters, including the transplanting distance.

The decoding card is able to detect the pulses from the generator, thus measuring the distance covered by the machine, and to make a comparison with the user-defined settings. The hydraulic motor of the drilling tools is controlled by the card according to this comparison; the pickup and transplanting tools of each single distributor are thus synchronised with the drilling action on the plastic film, in such a way that the plant is centered into the window of said film.

According to a preferred embodiment, a sensor is provided to detect rotation of the shaft of the drilling tools. The electronics of each single distributor receives a signal from said sensor and, with a possible phasing delay, controls the hydraulic motor of the pickup and transplanting tools mounted on the distributor. The pneumatic part (grippers for the clods) is in turn synchronised by a signal provided by the proximity sensor mounted on the control wheel of the tools.

The machine is thus able to arrange the plants according to the set transplanting distance, and to produce parallel rows or parallel staggered rows also known as "quincuncial" rows.

The positioning of the clods is much faster and more accurate compared to known machines, due to the two separate systems for moving the clods, and in particular to the transplanting tool laying the plants one by one directly in the furrow, rather than dropping them. The clods are released in a perfect vertical position, thus ensuring the best adherence to the lower plane of the furrow and therefore the best taking root.

The movement of the transplanting tool is a translation with no rotational component between the intermediate position and the actual transplanting position in the furrow, then it enables to release the plant in a perfect vertical arrangement and at a speed which is also substantially vertical, to the advantage of correct positioning of the plant.

The transplanting distance and/or the arrangement of the plants (for example parallel or staggered rows) can easily be modified and without having to dismantle or reassemble parts of the machine.

In practical terms, it will be sufficient to set the desired transplanting distance on the numeric keypad.

On a mulched soil, the above disclosed cutting tool creates an opening in the plastic film that is intended to receive the plants, folding the cut strip towards the interior; all this enables correct placement and visual inspection of the clod into the furrow, preventing the contact between the plastic film and the plant, which is potentially hazardous for the latter, promoting irrigation from above.

These and other features of the invention will become clearer from the more detailed description set out below, with the help of drawings that show a preferred embodiment thereof, illustrated by way of non-limitative example, in which:
Fig. 1 is a schematic side view of a distributor according to the invention;
Figs. 2 and 3 show the distributor in Fig. 1 in successive operating phases;
Figs. 4 and 5 show some details of the conveyor belt of the distributor of Fig. 1, wherein Fig. 4 is a top view and Fig. 5 is a side view;
Figs. 6 and 7 show further constructional details and refer in particular to the moving members for moving the clods of the distributor of Fig. 1.

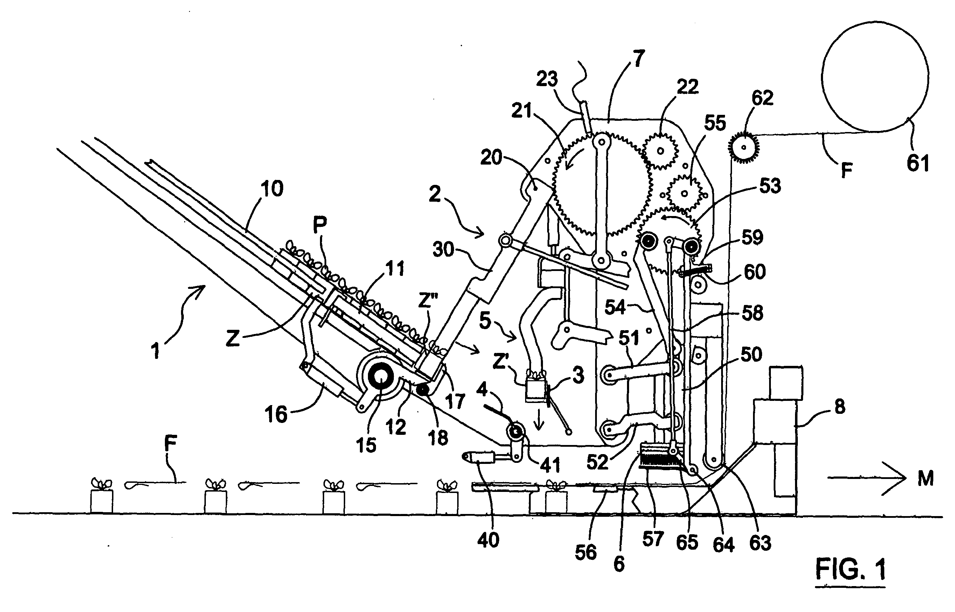

Referring now to the figures, an automatic distributor for transplanting machines is illustrated that is designed for stand-alone operation or as a modular unit of a transplanting machine with several distributors, having a running direction M (Fig. 1) on the soil.

The distributor comprises a feeding device for plants, shown as P, that are rooted in cubic clods Z. Said feeding device, in practice, consists of a conveyor belt 1 with manual loading by some operators.

The distributor essentially comprises a pickup tool 2, suitable for moving the plants individually from the conveyor belt 1 to an intermediate position; means for keeping the plants in said intermediate position, which in the example are achieved by a fixed abutment 3 cooperating with a movable abutment 4; a transplanting tool 5, suitable for grasping the plants in the intermediate position and take them to the final transplanting position.

The distributor is then provided with front shares 8, or equivalent means, acting when advancing in said running direction M, normally drawn by a tractor or agricultural vehicle. The shares 8 produce a furrow in the soil wherein the plants are placed, substantially through the joint operation of said tools 2 and 5.

In order to work on mulched terrains, that is covered with a plastic film shown as F, the distributor also comprises a further tool 6 adapted to perforate the said plastic film F.

The distributor mechanisms, which will be disclosed better below, are mounted on a frame plate 7 acting as a support.

In greater detail, the feed belt 1 is fitted with side retaining screens 10 to form substantially a moving channel inclined downwards and towards the direction M.

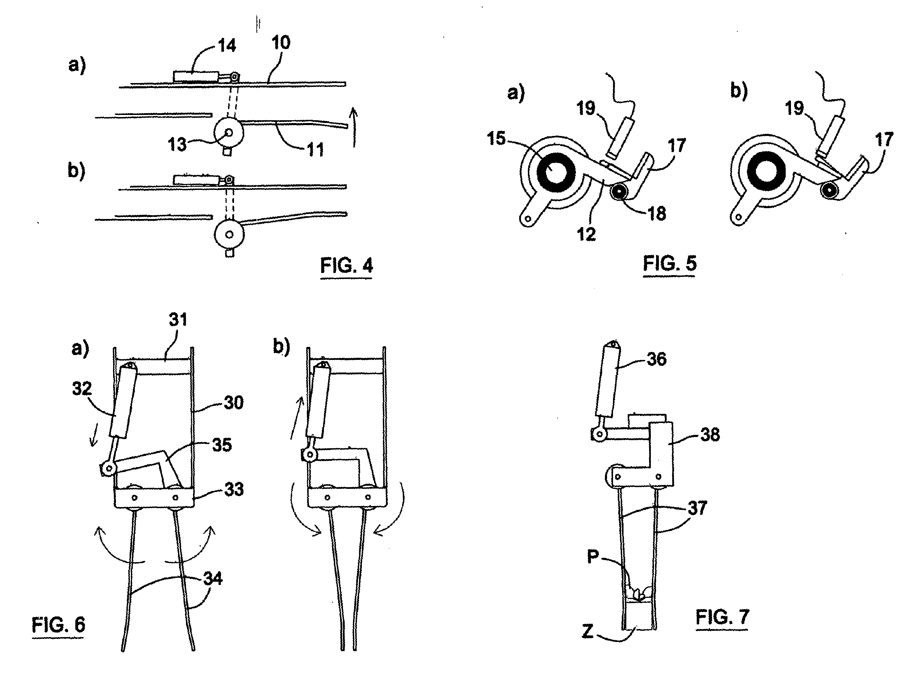

At the end portion of the belt 1 there is a movable screen 11 to clamp the clods Z laterally and stop the plants currently loaded on the belt. Said movable screen 11 (Fig. 4) is hinged on a rotating fulcrum 13 and is operated by a pneumatic jack 14. It may leave the clods Z free to advance on the conveyor belt (Fig. 4(a)) or stop them against the opposite screen 10 (Fig. 4 (b)) by clamping them on the sides.

The length of the screen 11, as can be seen in Fig. 1, is such as to leave free the first clod of the queue, shown as Z", so that said clod Z" can be picked up by the tool 2.

At the outlet of the belt 1, there is a further movable stop abutment 12, hinged on a rotating fulcrum 15 and moved by a pneumatic jack 16.

The movable abutment 12 has a flap 17, which faces the clods loaded on the belt 1 and is free to rotate on a fulcrum 18. The flap 17 is arranged to excite, by rotation around said fulcrum 18, an electronic sensor 19 positioned in the immediate vicinity (Fig. 5); the flap 17 is preferably L-shaped, as in the figure.

It should be noted that the flap 17, in cooperation with the sensor 19, creates a system for detecting the arrival of the clods Z, providing a signal when the first clod (Z" in Fig. 1) reaches the end of the belt 1 and is ready to be picked up by the tool 2.

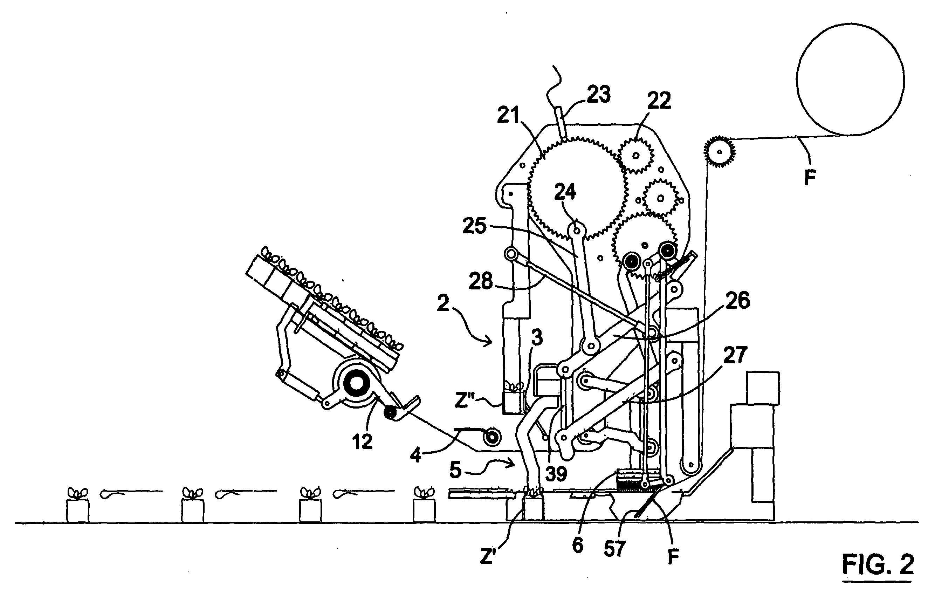

The pickup tool 2 is connected to the frame plate 7 through a fulcrum pin 20 and is arranged to follow an alternate coming and going movement with a substantially arc-shaped trajectory between a pickup position of the plants (Fig. 1), and a release position thereof between the fixed abutment 3 and the movable abutment 4 (Fig. 2).

The transplanting tool 5 is, on the other hand, moved between the intermediate position of the clods and the transplanting furrow produced, in the example, by the share 8.

The tools 2 and 5 are operated in a joint and coordinated manner by a geared wheel 21 which, in turn, is operated by a drive wheel 22 preferably connected to a hydraulic motor. A proximity sensor 23 is mounted near the wheel 21 to detect the rotation angle of said wheel.

The movement system of the tools 2 and 5 is shown is greater detail in Fig. 2. The wheel 21 carries a connecting rod 25 by an eccentric pin 24; said connecting rod 25 is acting on an articulated parallelogram structure, substantially formed of two parallel arms 26 and 27 hinged on the frame 7 and on the body of the transplanting tool 5. A further connecting rod 28 is provided to link said articulated parallelogram structure, and more in particular the arm 26, to the body of the pickup tool 2.

This movement system makes the transplanting tool 5 perform a rectilinear movement with no rotational component, with an almost vertical trajectory; this movement is particularly advantageous for the purposes of correct positioning of the plants in the furrow.

In a preferred embodiment, the pickup tool 2 (Fig. 6) consists substantially of a small frame 30, with a first crosspiece 31 that supports a pneumatic jack 32, and a second crosspiece 33 that supports two pickup members 34. Said pickup members 34 are represented by thin metal screens, that are movable between the positions of Fig. 6 a) and b) as indicated by the arrows, and are mounted on supports coupled by a gear sector. The jack 32 is connected to one of said supports by means of a link arm 35, and owing to the gear sector the screens 34 can be simultaneously operated.

The transplanting tool 5 is shown in greater detail in Fig. 7: it essentially comprises two metal screens 37 pivoted on a small bearing frame 38 and moved by means of a pneumatic jack 36. A gear-sector coupling, similar to the one disclosed above, ensures simultaneous opening and closing of the two screens 37. Fig. 7 shows a clod Z held by the tool and with a plant P rooted therein.

The bearing frame 38 is fixed to a plate 39 (Fig. 2) where the ends of the arms 26 and 27 are hinged.

Substantially, Figs. 6 and 7 show a preferred operation for the tools 2 and 5, handling the clods Z by clamping them on side faces by means respectively of the movable screens 34 and 37.

The clods are retained in the intermediate position, between the two tools, by the movable abutment 4 in cooperation with the fixed abutment 3. Preferably, said movable abutment 4 consists of a metal plate, moved by a pneumatic jack 40 (Fig. 1) with a quick rotation around a fulcrum 41.

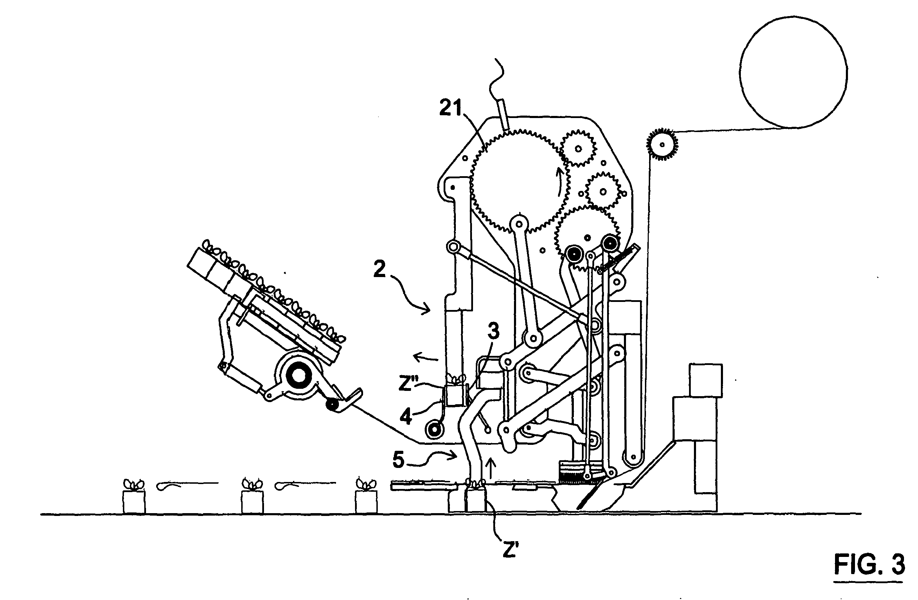

The movable abutment 4 can be displaced to lock one of clods Z against the fixed abutment 3 (position of Fig. 3), or to free it for handling by the transplanting gripper 5 (position of Figs 1 and 2).

The tool 6 is mounted on a support 50 guided by two parallel arms 51 and 52 hinged on the lower portion of the frame 7. Said tool 6 is operated by a geared wheel 53 with a connecting rod 54 acting on said support 50; the wheel 53 is in turn operated by a drive wheel 55 powered by a hydraulic motor (not shown).

Substantially, the wheel 21 controls the handling and releasing of the plants, whilst wheel 53 controls the perforation of the mulching film F. The hydraulic motors of wheels 21 and 53, by means of the respective drive wheels 22 and 55, are independent of one another, but are controlled in a synchronised manner by means of on/off solenoid valves disposed to open and close the pressurised oil flow to the motors.

The tool 6, from a constructional point of view, is shaped like a "U" with the two tips pointing in the travel direction M, and consists of multiple cusps adapted for perforating the film F. The perforation of the film F is made in adherence to the share 8, which has a blind back 56 (Fig 1), except for the perforating zone. The film runs adhering to the back 56 of the share, and during the cutting operation the part at the perimeter of the drilling zone provides sufficient resistance to enable the perforation by tool 6.

The tool 6 is furthermore provided with an extracting lever 57 to direct the plastic offcut of the film F downwards and in the travel direction of the side facing the plot, thus enabling the opening of a window for positioning the plant and without leaving strips exposed to the exterior, in particular to the wind, which may damage the plants. The window so obtained on the film F is preferably a square window.

The extracting lever 57 is pivoted at one end 64, facing the travel direction M, and is operated by a rod 58 by means of a short connecting rod 65. Said rod 58 connects to the wheel 53 with a square 59, with an eccentric drive, and with a return spring 60. The movement of the tool 6 is apparent from the comparison between Fig. 1 and Fig. 2.

The film F unwinds from a reel 61; a drilling roller 62 is provided for making holes in the film F for the passage of air. A tensioning roller 63 is positioned just upstream of the perforating tool 6 (Fig. 1).

The disclosed distributor is normally a part of a transplanting machine that comprises a plurality of distributors, e.g. three or four units, mounted on a motorized frame or on a carrying frame to be hooked to a tractor.

Preferably, the distributors are alongside one another and aligned together; each distributor is provided with a hydraulic motor to operate the wheel 22, that is to operate the pickup and transplanting tools 2 and 5; the wheels 55, on the other hand, are splined on a shaft, for example using hexagonal shaft and bushes, and operated by a further hydraulic motor which is in common for all distributors.

The hydraulic motors are controlled by independent on/off solenoid valves.

Adoption of a dedicated hydraulic motor for the tools of each distributor is advantageous, inasmuch as it enables the tools to be driven in the exact moment when the plant reaches the end of the belt 1, triggering the sensor 19 by means of the flap 17. This solution prevents tools 2 and 5 from moving empty and/or clamping a clod in an incorrect way, for example too close to the edges.

The transplanting machine also comprises an electronic control system (not shown), by means of a pulse generator fixed e.g. to the front roller or to the supporting wheels; an electronic decoding card adapted to detect the pulses from the generator; a numeric control keypad. The card is suitable for detecting the pulses of the generator and to compare them with a preset value inserted by the user through said keypad.

A further proximity sensor, not shown, (or a pair of sensors) detects the rotation of the splining shaft of the wheels 55.

Said sensor provides a signal that can be used by the distributors to start the hydraulic motor of the wheel 22. The pneumatic jacks are then controlled by the sensor signal 23.

For this purpose, each distributor is provided with a dedicated electronics and preferably also with a fine adjustment trimmer. The trimmer enables to set a certain delay between the receipt of the rotation signal from the shaft of wheels 55, and actual operation of tools 2 and 5, to compensate for inertia of the hydraulic/pneumatic part, for example the valve response time, which is not instantaneous.

The compressed air and the pressurised oil are supplied by a compressor and by a pump, powered for example by the cardan shaft of the tractor. Both the pump and the compressor can be on the transplanting machine or the traction means.

The distributor operates as follows.

Fig. 1 shows a clod Z', and the respective plant, held in the tool 5, whilst a second clod Z" is near the movable abutment 12 and ready to be grasped by the tool 2.

The clod Z", when reaching the end of the belt 1, moves the flap 17 to the position of Fig. 5b), thus exciting the sensor 19 that detects the exact time of "arrival" of the plant. The signal of said sensor 19 causes the side gripper 11 to close immediately, turning to the position of Fig. 4b) and holding the second and further plants queued on belt 1.

Simultaneously, the electronic control system closes the gripper 34 of the tool 2 by means of the respective jack 32, whilst the stop 12 rotates around the fulcrum 15 to open and enable the passage of the clod Z".

The solenoid valve of the hydraulic motor of the wheel 22 is opened, making the wheel 21 to perform approximately half a revolution in anti-clockwise direction (seen in Fig. 1); the distributor then goes to the position of Fig. 2.

This movement, by means of the disclosed kinematic mechanisms, causes the lowering of the transplanting tool 5, down inside the furrow obtained by the share 8, and through the window in the plastic film F opened by the tool 6; simultaneously, the pickup tool 2 takes the clod Z" to the parking position between abutments 3 and 4.

A comparison between Figs. 1 and 2 shows that simultaneously with the movement of the tools 2 and 5, the wheel 53 performs a portion of an anti-clockwise revolution, driving the tool 6 and the extractor 57. The tool 6 cuts the plastic film F, which runs underneath the tool because the machine is advancing, folding the cut strip inwardly. The operation does not create offcuts and does not leave any plastic strips in contact with the plants.

When the transplanting tool 5 reaches the end of the lower stroke (Figs. 2-3), the system commands the opening of the gripper by means of the jack 36, placing the clod on the bottom of the furrow, in a vertical position and with the leaf pointing upwards, outside the plastic film F.

The positioning system does not make the plant fall from some centimetres, as known machines do; furthermore, the tool 5 performs a translation movement with no rotation components that maintains the verticality of the plant. When screens 37 open, the plant has a completely vertical orientation and a speed close or equal to null; all this enables to achieve the aforementioned advantages of a precise positioning in the furrow and good adherence between the cubic clod and the furrow.

Subsequently (Fig. 3) the movable abutment 4 closes, clamping the clod Z" against the contrasting abutment 3, whilst the wheel 21, with another half revolution in the anticlockwise direction of Fig. 1, lifts up the tool 5 and simultaneously returns the tool 2 to the belt 1. The tool 2 grasps the clod Z" and the movable abutment 4 opens, returning to the situation of Fig. 1 wherein the machine is ready to start a new cycle.

The above phases are performed in a very rapid succession, with work cycles that are synchronised, in practice, with the action of the drilling system.

The main card of the machine operates the hydraulic motor of the drilling tools 6. The individual distributors, thus, on the basis of the signal received by the proximity sensor on the splining shaft of the wheels 55, control the hydraulic motor of the wheel 22 that drives the tools 2 and 5. The pneumatic jacks are in turn controlled by the sensor signal 23, and are thus synchronised with the movement of the tools.

## Claims

1. Automatic distributor for transplanting machines of plants (P) rooted in clods (Z), comprising:
- a feeding device (1) for the plants (P);
- means (8) for making at least a transplanting furrow in the soil;
- a first pick-up system (2) disposed to individually pick up the plants (P) from said feeding device (1) and take them to an intermediate position;
- retaining means (3,4) disposed to temporarily keep the plants (P) in said intermediate position;
- a second pick-up system (5) disposed to pick up the plants (P) from said intermediate position and take them into said transplanting furrow;
**characterized in that** said retaining means for keeping the plants in said intermediate position comprise a movable abutment (4) cooperating with a fixed abutment (3).

2. Distributor according to claim 1, **characterised in that** the first pickup system comprises a pickup tool (2) with an alternate coming and going movement between the outlet of the feeding device (1) and said intermediate position.

3. Distributor according to claim 2, **characterised in that** the pickup tool (2) moves on an arc trajectory according to a fulcrum point (20).

4. Distributor according to any one of claims 1 to 3, **characterised in that** the second pickup system comprises a transplanting tool (5) disposed to translate between said intermediate position and a transplanting position in said furrow, with a substantially vertical trajectory.

5. Distributor according to claim 4, **characterised in that** the Transplanting tool (5) is guided by means of parallel arms (26, 27) arranged between a frame element (7) of the distributor and the body of said tool (5), forming an articulated parallelogram structure.

6. Distributor according to claim 5, **characterised in that** said articulated parallelogram is connected to a control wheel (21) by means of an eccentric connecting rod (25).

7. Distributor according to any preceding claim, **characterised in that** the pickup tool (2) is connected mechanically to said articulated parallelogram structure of the transplanting tool (5), to obtain a coordinated joint operation of said two tools.

8. Distributor according to any preceding claim, **characterised in that** at least one of said pickup (2) and transplanting (5) tools comprises pincer-like grasping means (34, 37) suitable for side-clamping the clods (Z) wherein the plants (P) are rooted.

9. Distributor according to claim 8, **characterised in that** said grasping means (34, 37) are connected to pneumatic operating means (32, 36).

10. Distributor according to any preceding claim, **characterised in that** it comprises sensor means (23) for detecting the position of said pickup tool (2) and said transplanting tool (5).

11. Distributor according to claim 10, **characterised in that** it comprises a proximity sensor (23) mounted near said control wheel (21), to detect the position of said tools (2, 5).

12. Distributor according to any preceding claim, **characterised in that** it comprises a drilling tool (6) for drilling a mulching film (F), said tool (6) being provided with an extracting lever (57) suitable for directing the plastic scrap which is generated by cutting action downwards and in the running direction (M).

13. Distributor according to claim 12, **characterised in that** the drilling tool (6) is shaped like a "U" orientated in the running direction (M): said extracting lever (57) is pivoted at an end (64), facing the running direction (M); the tool (6) and the extracting lever (57) are jointly operated by a control wheel (53).

14. Distributor according to claim 13, **characterised in that** the drilling tool (6) is mounted on a support (50) guided by two parallel arms (51, 52) hinged on the lower portion of the frame (7) of the distributor; said tool (6) is connected to said control wheel (53) by means of a connecting rod (54) acting on said support (50); the control wheel (53) is connected to a drive wheel (55); the extracting lever (57) is pivoted at an end (64) and is controlled by means of a rod (58) that is connected to the control wheel (53) with a square (59) with an eccentric drive and is provided with a return spring (60).

15. Distributor according to any preceding claim, **characterised in that** the control wheels (21, 53) of the tools (2, 5, 6) are operated by hydraulic motors.

16. Transplanting machine comprising a plurality of distributors of plant rooted in clods according to any preceding claim.

17. Transplanting machine according to c!aim 16, **characterised by** an electronic control system comprising a generator of a pulse signal correlated to the distance covered by the machine and a decoding card, wherein the decoding card is able to detect the pulses emitted by said generator, thus obtaining a measure of the distance covered by the advancing machine, and to compare said measure with a user-defined value, to control and coordinate with precision the individual distributors and to obtain the transplanting distance and/or the desired arrangement of the plants.

18. Transplanting machine according to claim 16 or 17, **characterised in that**: each distributor is provided with a hydraulic motor for driving the pickup tool (2) and transplanting tool (5); a further hydraulic motor which is in common between all the distributors is provided to drive the drilling tools (6) of the mulching film (F); a sensor is provided to detect the operation of said drilling tools (6) controlled by a general control card; the distributors comprise an electronic part that, by means of a signal supplied by said sensor, controls said pickup tool (2) and transplanting tools (5) for transplanting the plants (P).

## Patentansprüche

1. Automatischer Verteiler für Pflanzmaschinen von Pflanzen (P), die in Erdklumpen (Z) verwurzelt sind, umfassend:
- eine Beschickungsvorrichtung (1) für die Pflanzen (P);
- Mittel (8), um mindestens eine Pflanzungsfurche im Boden zu machen;
- ein erstes Pick-up-System (2), angeordnet, um die Pflanzen (P) einzeln aus besagter Beschickungsvorrichtung (1) aufzusammeln und sie in eine Zwischenposition zu bringen;
- Haltemittel (3, 4), angeordnet, um die Pflanzen (P) vorübergehend in der besagten Zwischenposition festzuhalten;
- ein zweites Pick-up-System (5), angeordnet, um die Pflanzen (P) von der besagten Zwischenposition aufzusammeln und sie in die Pflanzungsfurche zu bringen;
**gekennzeichnet dadurch, dass** die besagten Haltemittel, die die Pflanzen in der besagten Zwischenposition festhalten, einen beweglichen Anschlag (4) umfassen, der mit einem festen Anschlag (3) zusammenwirkt.

2. Verteiler nach Anspruch 1, **gekennzeichnet dadurch, dass** das erste Pick-up-System ein Pick-up-Werkzeug (2) mit einer abwechselnden Hin- und Herbewegung zwischen dem Ausgang der Beschickungsvorrichtung (1) und besagter Zwischenposition umfasst.

3. Verteiler nach Anspruch 2, **gekennzeichnet dadurch, dass** sich das Pick-up-Werkzeug (2) in Übereinstimmung mit einem Drehpunkt (20) auf einer bogenförmigen Bahn bewegt.

4. Verteiler nach einem jeglichen der Ansprüche 1 bis 3, **gekennzeichnet dadurch, dass** das zweite Pick-up-System ein Pflanzungswerkzeug (5) umfasst, angeordnet zur Übertragung zwischen der besagten Zwischenposition und einer Pflanzungsposition in die besagte Furche, mit einer im Wesentlichen vertikalen Bahn.

5. Verteiler nach Anspruch 4, **gekennzeichnet dadurch, dass** das Pflanzungswerkzeug (5) durch parallele Arme (26, 27) geleitet wird, die zwischen einem Rahmenelement (7) des Verteilers und dem Körper des besagten Werkzeugs (5) angeordnet sind und eine artikulierte Parallelogrammstruktur bilden.

6. Verteiler nach Anspruch 5, **gekennzeichnet dadurch, dass** das besagte artikulierte Parallelogramm mit einem Triebrad (21) durch eine exzentrische Verbindungsstange (25) verbunden ist.

7. Verteiler nach einem beliebigen vorhergehenden Anspruch, **gekennzeichnet dadurch, dass** das Pick-up-Werkzeug (2) mechanisch mit der besagten artikulierten Parallelogrammstruktur des Pflanzungswerkzeugs (5) verbunden ist, damit ein koordinierter gemeinsamer Betrieb der besagten beiden Werkzeuge erreicht wird.

8. Verteiler nach einem beliebigen vorhergehenden Anspruch, **gekennzeichnet dadurch, dass** zumindest eines der besagten Pick-up-(2) und Pflanzungswerkzeuge (5) zangenähnliche Greifmittel (34, 37) umfasst, geeignet für das seitliche Einklemmen der Erdklumpen (Z), in denen die Pflanzen (P) verwurzelt sind.

9. Verteiler nach Anspruch 8, **gekennzeichnet dadurch, dass** besagte Greifmittel (34, 37) mit pneumatisch angetriebenen Mitteln (32, 36) verbunden sind.

10. Verteiler nach einem beliebigen vorhergehenden Anspruch, **gekennzeichnet dadurch, dass** er eine Sensoreinrichtung (23) zum Ermitteln der Position des besagten Pick-up-Werkzeugs (2) und des besagten Pflanzungswerkzeugs (5) umfasst.

11. Verteiler nach Anspruch 10, **gekennzeichnet dadurch, dass** er einen Annäherungssensor (23) umfasst, der nahe am besagten Triebrad (21) montiert ist, um die Position der besagten Werkzeuge (2, 5) zu ermitteln.

12. Verteiler nach einem beliebigen vorhergehenden Anspruch, **gekennzeichnet dadurch, dass** er ein Bohrwerkzeug (6) zum Aufbohren einer Mulchfolie (F) umfasst, wobei besagtes Werkzeug (6) mit einem Extraktionshebel (57) versehen ist, geeignet, um den Kunststoffabfall, der durch den Schneidevorgang entsteht, nach unten und in die Laufrichtung (M) zu leiten.

13. Verteiler nach Anspruch 12, **gekennzeichnet dadurch, dass** das Bohrwerkzeug (6) in der Form eines "U" gestaltet ist, das in Laufrichtung (M) ausgerichtet ist; besagter Extraktionshebel (57) wird an einem Ende (64) geschwenkt und ist der Laufrichtung (M) zugewandt; das Werkzeug (6) und der Extraktionshebel (57) werden durch ein Triebrad (53) gemeinsam angetrieben.

14. Verteiler nach Anspruch 13, **gekennzeichnet dadurch, dass** das Bohrwerkzeug (6) auf einem Träger (50) montiert ist, der von zwei parallel verlaufenden Armen (51, 52) gelenkt wird, die auf dem unteren Teil des Rahmens (7) des Verteilers gelenkartig angebracht sind; besagtes Werkzeug (6) ist mit besagtem Triebrad (53) durch eine Verbindungsstange (54) verbunden, die auf besagten Träger (50) einwirkt; das Triebrad (53) ist mit einem Antriebsrad (55) verbunden; der Extraktionshebel (57) wird an einem Ende (64) geschwenkt und mittels einer Stange (58) kontrolliert, die mit dem Triebrad (53) mit einem Viereck (59) mit einem Exzenterantrieb verbunden und mit einer Rückholfeder (60) versehen ist.

15. Verteiler nach einem beliebigen vorhergehenden Anspruch, **gekennzeichnet dadurch, dass** die Triebräder (21, 53) der Werkzeuge (2, 5, 6) durch hydraulische Motoren angetrieben werden.

16. Pflanzmaschine, umfassend eine Vielzahl von Verteilern von Pflanzen, die in Erdklumpen verwurzelt sind, nach einem beliebigen vorhergehenden Anspruch.

17. Pflanzmaschine nach Anspruch 16, **gekennzeichnet durch** ein elektronisches Kontrollsystem, das einen Impulssignalgenerator, der mit der von der Maschine zurückgelegten Entfernung korreliert ist, und eine Decoderkarte umfasst, wobei die Decoderkarte in der Lage ist, die vom besagten Generator ausgegebenen Impulse zu ermitteln, um auf diese Weise ein Maß für die **durch** die vorrückende Maschine zurückgelegte Entfernung zu erhalten und besagtes Maß mit einem benutzerdefinierten Wert zu vergleichen, die einzelnen Verteiler genau zu kontrollieren und zu koordinieren und die Pflanzungsentfernung und/oder die gewünschte Anordnung der Pflanzen zu erhalten.

18. Pflanzmaschine nach Anspruch 16 oder 17, durch Folgendes **gekennzeichnet**: Jeder Verteiler ist mit einem hydraulischen Motor zum Antrieb des Pick-up-Werkzeugs (2) und des Pflanzungswerkzeugs (5) versehen; ein weiterer hydraulischer Motor, der allen Verteilern gemeinsam ist, treibt die Bohrwerkzeuge (6) der Mulchfolie (F) an; ein Sensor ermittelt den Betrieb der besagten Bohrwerkzeuge (6), kontrolliert durch eine allgemeine Kontrollkarte; die Verteiler umfassen einen elektronischen Teil, der mittels eines durch den besagten Sensor gelieferten Signals besagtes Pick-up-Werkzeug (2) und die Pflanzungswerkzeuge (5) zum Einpflanzen der Pflanzen (P) kontrolliert.

## Revendications

1. Distributeur automatique pour repiqueuse mécanique de plantes (P) enracinées en mottes (Z), comprenant :
- un dispositif d'alimentation (1) pour les plantes (P);
- des moyens (8) pour réaliser au moins un sillon de repiquage dans le sol ;
- un premier système de prélèvement (2) disposé pour prélever individuellement les plantes (P) dudit dispositif d'alimentation (1) et les porter dans une position intermédiaire ;
- des moyens de retenue (3, 4) disposés pour conserver temporairement les plantes (P) dans ladite position intermédiaire ;
- un deuxième système de prélèvement (5) disposé pour prélever les plantes (P) de ladite position intermédiaire et les porter dans ledit sillon de repiquage ;
**caractérisé par le fait que** lesdits moyens de retenue pour conserver les plantes dans ladite position intermédiaire comprennent une butée mobile (4) coopérant avec une butée fixe (3).

2. Distributeur selon la revendication 1, **caractérisé par le fait que** le premier système de prélèvement comprend un outil de prélèvement (2) avec un mouvement de va-et-vient alternatif entre la sortie du dispositif d'alimentation (1) et ladite position intermédiaire.

3. Distributeur selon la revendication 2, **caractérisé par le fait que** l'outil de prélèvement (2) se déplace sur une trajectoire d'arc selon un point de pivot (20).

4. Distributeur selon l'une des revendications 1 à 3, **caractérisé par le fait que** le deuxième système de prélèvement comprend un outil de repiquage (5) disposé pour effectuer une translation entre ladite position intermédiaire et une position de repiquage dans ledit sillon, avec une trajectoire substantiellement verticale.

5. Distributeur selon la revendication 4, **caractérisé par le fait que** l'outil de repiquage (5) est guidé au moyen de bras parallèles (26, 27) disposés entre un élément de châssis (7) du distributeur et le corps dudit outil (5), formant une structure en parallélogramme articulé.

6. Distributeur selon la revendication 5, **caractérisé par le fait que** ledit parallélogramme articulé est relié à un volant de contrôle (21 ) au moyen d'une tige de raccordement excentrique (25).

7. Distributeur selon l'une des revendications précédentes, **caractérisé par le fait que** l'outil de prélèvement (2) est relié mécaniquement à ladite structure en parallélogramme articulé de l'outil de repiquage (5), pour obtenir un fonctionnement joint coordonné desdits deux outils.

8. Distributeur selon l'une des revendications précédentes, **caractérisé par le fait qu'**au moins un desdits outils de prélèvement (2) et de repiquage (5) comprend des moyens de saisie de type pince (34, 37) prévus pour le blocage latéral des mottes (Z) dans lesquelles les plantes (P) sont enracinées.

9. Distributeur selon la revendication 8, **caractérisé par le fait que** lesdits moyens de saisie (34, 37) sont reliés aux moyens d'actionnement pneumatiques (32, 36).

10. Distributeur selon l'une des revendications précédentes, **caractérisé par le fait qu'**il comprend des moyens de détection (23) pour détecter la position dudit outil de prélèvement (2) et dudit outil de repiquage (5).

11. Distributeur selon la revendication 10, **caractérisé par le fait qu'**il comprend un capteur de proximité (23) monté à proximité dudit volant de contrôle (21), pour détecter la position desdits outils (2, 5).

12. Distributeur selon l'une des revendications précédentes, **caractérisé par le fait qu'**il comprend un outil de perçage (6) pour percer un film de paillage (F), ledit outil (6) étant doté d'un levier d'extraction (57) adapté pour orienter le rebut de plastique généré par l'action de découpe vers le bas et dans la direction de marche (M).

13. Distributeur selon la revendication 12, **caractérisé par le fait que** l'outil de perçage (6) est en forme de « U » orienté dans la direction de marche (M) ; ledit levier d'extraction (57) est pivoté sur une extrémité (64), face à la direction de marche (M) ; l'outil (6) et le levier d'extraction (57) sont actionnés conjointement par un volant de contrôle (53).

14. Distributeur selon la revendication 13, **caractérisé par le fait que** l'outil de perçage (6) est monté sur un support (50) guidé par deux bras parallèles (51, 52) fixés par charnière sur la portion inférieure du châssis (7) du distributeur ; ledit outil (6) est connecté audit volant de contrôle (53) à l'aide d'une tige de raccordement (54) agissant sur ledit support (50) ; le volant de contrôle (53) est connecté à un volant d'entraînement (55) ; le levier d'extraction (57) est pivoté sur une extrémité (64) et il est contrôlé à l'aide d'une tige (58) qui est reliée au volant de contrôle (53) avec une équerre (59) à entraînement excentrique et dotée d'un ressort de retour (60).

15. Distributeur selon l'une des revendications précédentes, **caractérisé par le fait que** les volants de contrôle (21, 53) des outils (2, 5, 6) sont actionnés par des moteurs hydrauliques.

16. Repiqueuse mécanique comprenant une pluralité de distributeurs de plantes enracinées en mottes selon l'une des revendications précédentes.

17. Repiqueuse mécanique selon la revendication 16, **caractérisée par** un système de contrôle électronique comprenant un générateur de signal à impulsion corrélé avec la distance couverte par la machine et une carte de décodage, où la carte de décodage est capable de détecter les impulsions émises par ledit générateur, obtenant ainsi une mesure de la distance couverte par la machine qui avance, et de comparer ladite mesure avec une valeur définie par l'utilisateur, pour contrôler et coordonner avec précision les distributeurs individuels et pour obtenir la distance de repiquage et/ou la disposition désirée des plantes.

18. Repiqueuse mécanique selon la revendication 16 ou 17, **caractérisée par le fait que** : chaque distributeur est doté d'un moteur hydraulique pour entraîner l'outil de prélèvement (2) et l'outil de repiquage (5) ; un moteur hydraulique supplémentaire qui est commun à tous les distributeurs est prévu pour entraîner les outils de perçage (6) du film de paillage (F) ; un capteur est prévu pour détecter le fonctionnement desdits outils de perçage (6) contrôlé par une carte de contrôle générale ; les distributeurs comprenant une partie électronique qui contrôle ledit outil de prélèvement (2) et les outils de repiquage (5) pour repiquer les plantes (P) à l'aide d'un signal fourni par ledit capteur.
